# EUROPÄISCHE PATENTANMELDUNG

(11) **EP 4 095 736 A1**
(43) Veröffentlichungstag der Anmeldung: **30.11.2022**
(21) Anmeldenummer: 21176519.3
(22) Anmeldetag: 28.05.2021
(51) Int. Cl.: G06F 30/27, G05B 19/418

(54) **VERFAHREN UND SYSTEM ZUM STEUERN EINES PRODUKTIONSSYSTEMS**

(71) Anmelder: Siemens Aktiengesellschaft, 80333 München (DE)
(72) Erfinder: Depeweg, Stefan, 81673 München (DE); Heesche, Kai, 81539 München (DE); Kaiser, Markus, 80539 München (DE)

(57) **Zusammenfassung**

Es wird eine Vielzahl von Testdatensätzen eingelesen, die jeweils einen eine Konstruktionsvariante eines Produkts (P) spezifizierenden, ersten Designdatensatz (DR1) sowie zu optimierende Zielgrößen dieser Konstruktionsvariante quantifizierende, erste Zielwerte (V1) umfassen. Hinsichtlich der ersten Zielwerte (V1) wird eine erste Rangfolge (R1) der ersten Designdatensätze (DR1) ermittelt. Weiterhin werden mehrere Designbewertungsmodule (EV1,...,EVN) jeweils zur Prädiktion von Zielwerten anhand von Designdatensätzen bereitgestellt. Durch die Designbewertungsmodule (EV1,...,EVN) werden jeweils Zielwerte (VP1,...,VPN) für die ersten Designdatensätze (DR1) prädiziert. Für ein jeweiliges Designbewertungsmodul (EV1,...,EVN) werden dann eine jeweilige zweite Rangfolge (R2) der ersten Designdatensätze (DR1) hinsichtlich der prädizierten Zielwerte (VP1,...,VPN) und eine jeweilige Abweichung (D) der jeweiligen zweiten Rangfolge (R2) von der ersten Rangfolge (R1) ermittelt. Abhängig von den ermittelten Abweichungen (D) wird dann ein Designbewertungsmodul (EVS) selektiert.

Weiterhin wird eine Vielzahl von zweiten Designdatensätzen (DR2) generiert, für die jeweils durch das selektierte Designbewertungsmodul (EVS) zweite Zielwerte (V2) prädiziert werden. Abhängig von den zweiten Zielwerten (V2) wird dann ein zielwertoptimierter Designdatensatz (ODR) aus den zweiten Designdatensätzen abgeleitet und zur Herstellung des Produkts (P) ausgegeben.

## Beschreibung

Zur Herstellung komplexer technischer Produkte, wie beispielsweise Robotern, Motoren, Turbinen, Turbinenschaufeln, Verbrennungskraftmaschinen, Werkzeugen, Kraftfahrzeugen oder deren Komponenten, werden in zunehmendem Maße rechnergestützte Designsysteme eingesetzt. Mittels derartiger Designsysteme werden in der Regel Designdaten erzeugt, die ein herzustellendes Produkt detailliert spezifizieren und mit deren Hilfe Produktionssysteme zur Herstellung des spezifizierten Produkts angesteuert werden können.

Zur Optimierung von erwünschten Produkteigenschaften wird häufig angestrebt, die Designdaten für das Produkt automatisch zu optimieren. Die Produkteigenschaften oder Zieleigenschaften können dabei eine Performanz, eine Leistung, einen Ertrag, eine Geschwindigkeit, ein Gewicht, eine Laufzeit, eine Präzision, eine Fehlerrate, einen Ressourcenverbrauch, einen Wirkungsgrad, eine Effizienz, einen Schadstoffausstoß, eine Stabilität, einen Verschleiß, eine Lebensdauer, eine physikalische Eigenschaft, eine mechanische Eigenschaft, eine chemische Eigenschaft, eine elektrische Eigenschaft, eine magnetische Eigenschaft, eine einzuhaltende Nebenbedingung oder andere Zielgrößen des Produkts betreffen.

Zur Optimierung von Zielgrößen für ein Produkt werden häufig multidimensionale Optimierungsverfahren, sogenannte MDO-Verfahren (MDO: Multi Dimensional Optimization) eingesetzt. Diese MDO-Verfahren simulieren in der Regel eine Vielzahl von durch Designdaten spezifizierten Konstruktionsvarianten des Produkts und wählen spezifisch diejenigen aus, die die simulierten Zielgrößen optimieren.

Derartige Simulationen erfordern jedoch häufig einen erheblichen Rechenaufwand, insbesondere da häufig eine große Vielzahl von Konstruktionsvarianten zu bewerten sind. Zur Reduzierung des erforderlichen Rechenaufwands werden oft sogenannte Surrogat-Modelle benutzt, die insbesondere durch Verfahren des maschinellen Lernens darauf trainiert werden, relevante Simulationsergebnisse oder Zielgrößen ohne detaillierte Simulation zu prädizieren. Derartige Surrogat-Modelle weisen jedoch häufig eine geringe oder schwankende Genauigkeit auf.

Es ist Aufgabe der vorliegenden Erfindung ein Verfahren und ein System zum Steuern eines Produktionssystems anzugeben, die eine effizientere Designoptimierung erlauben.

Gelöst wird diese Aufgabe durch ein Verfahren mit den Merkmalen des Patentanspruchs 1, durch ein System mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruchs 12.

Zum Steuern eines Produktionssystems zur Herstellung eines hinsichtlich mehrerer Zielgrößen optimierten Produkts wird eine Vielzahl von Testdatensätzen eingelesen, die jeweils einen eine Konstruktionsvariante des Produkts spezifizierenden, ersten Designdatensatz sowie die Zielgrößen dieser Konstruktionsvariante quantifizierende, erste Zielwerte umfassen. Unter einem Optimieren sei hier und im Folgenden auch eine Annäherung an ein Optimum verstanden. Hinsichtlich der ersten Zielwerte wird eine erste Rangfolge der ersten Designdatensätze ermittelt. Weiterhin werden mehrere Designbewertungsmodule jeweils zur Prädiktion von Zielwerten anhand von Designdatensätzen bereitgestellt. Durch die Designbewertungsmodule werden jeweils Zielwerte für die ersten Designdatensätze prädiziert. Für ein jeweiliges Designbewertungsmodul werden dann eine jeweilige zweite Rangfolge der ersten Designdatensätze hinsichtlich der prädizierten Zielwerte und eine jeweilige Abweichung der jeweiligen zweiten Rangfolge von der ersten Rangfolge ermittelt. Abhängig von den ermittelten Abweichungen wird dann ein Designbewertungsmodul selektiert. Weiterhin wird eine Vielzahl von zweiten Designdatensätzen generiert, für die jeweils durch das selektierte Designbewertungsmodul zweite Zielwerte prädiziert werden. Abhängig von den zweiten Zielwerten wird dann ein zielwertoptimierter Designdatensatz aus den zweiten Designdatensätzen abgeleitet und zur Herstellung des Produkts ausgegeben.

Zum Ausführen des erfindungsgemäßen Verfahrens sind ein System zum Steuern eines Produktionssystems, ein Computerprogrammprodukt sowie ein computerlesbares, vorzugsweise nichtflüchtiges Speichermedium vorgesehen.

Das erfindungsgemäße Verfahren sowie das erfindungsgemäße System können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Mittels der Erfindung können insbesondere solche Designbewertungsmodule für eine Designoptimierung ausgewählt werden, die eine aus vorgegebenen Daten abgeleitete Rangfolge von Designdatensätzen möglichst genau reproduzieren. Derartige Designbewertungsmodule können somit in vorteilhafter Weise dazu genutzt werden, einen zielwertoptimierten Designdatensatz verhältnismäßig zuverlässig als solchen zu erkennen bzw. von weniger optimalen Designdatensätzen zu unterscheiden. Dabei kann insbesondere auch ein Designbewertungsmodul, dass sich hinsichtlich der prädizierten Zielwerte systematisch verschätzt, dennoch sehr vorteilhaft anwendbar sein, sofern es nur die tatsächliche Rangfolge möglichst gut reproduziert.

Vorteilhafte Ausführungsformen und Weiterbildungen der Erfindung sind in den abhängigen Ansprüchen angegeben.

Gemäß einer vorteilhaften Ausführungsform der Erfindung können als Designbewertungsmodule Maschinenlernmodule bereitgestellt werden, die mittels Trainingsdatensätzen, die nicht mit den Testdatensätzen übereinstimmen, darauf trainiert wurden, anhand eines Trainings-Designdatensatzes zugehörige Trainings-Zielwerte zu reproduzieren. Derartige trainierte Maschinenlernmodule erfordern bei ihrer Anwendung in der Regel erheblich weniger Rechenressourcen als detaillierte Simulationsmodelle.

Nichtsdestotrotz können als Designbewertungsmodule auch Simulationsmodule bereitgestellt werden, die jeweils anhand eines eine Konstruktionsvariante spezifizierenden Designdatensatzes die Zielwerte dieser Konstruktionsvariante simulativ prädizieren. Auf diese Weise können mittels der Erfindung auch Simulationsmodule hinsichtlich ihrer Genauigkeit bei der Prädiktion von Rangfolgen bewertet werden.

Nach einer besonders vorteilhaften Ausführungsform der Erfindung kann ein jeweiliges Designbewertungsmodul zur Prädiktion von Zielwerten für einen jeweiligen ersten Designdatensatz jeweils eine statistische Verteilung dieser Zielwerte ausgeben. Zu diesem Zweck kann ein jeweiliges Designbewertungsmodul ein bayessches neuronales Netz und/oder einen Gauß-Prozess implementieren. Eine solche statistische Verteilung kann insbesondere durch einen Mittelwert, einen Median, eine Varianz, eine Standardabweichung, eine Unsicherheitsangabe, eine Zuverlässigkeitsangabe, eine Wahrscheinlichkeitsverteilung, einen Verteilungstyp und/oder eine Verlaufsangabe der Zielwerte spezifiziert werden. Anhand der jeweiligen statistischen Verteilung kann dann eine jeweilige Zielwerte-Stichprobe, insbesondere zufällig ausgewählt werden. Damit kann die jeweilige zweite Rangfolge hinsichtlich der ausgewählten Zielwerte-Stichproben ermittelt werden. Darüber hinaus können die ausgewählten Zielwerte-Stichproben, die ermittelten zweiten Rangfolgen und/oder die ermittelten Abweichungen zur Selektion eines Designbewertungsmoduls über mehrere Durchläufe des Verfahrensschritts e) von Anspruch 1 aggregiert werden. Die Aggregation kann hierbei eine Mittelung, eine Integration und/oder eine Bildung eines Minimums, eines Maximums, eines Quantils und/oder eines Perzentils umfassen.

Aufgrund der Berücksichtigung von statistischen Verteilungen der Zielwerte kann deren jeweilige Unsicherheit abgeschätzt werden. Auf diese Weise lassen sich insbesondere robustere oder zuverlässigere Konstruktionsvarianten selektieren.

Gemäß einer weiteren vorteilhaften Ausführungsform der Erfindung kann zum Ermitteln der ersten und/oder der jeweiligen zweiten Rangfolge für die ersten Designdatensätze eine Pareto-Optimierung mit den Zielgrößen als Pareto-Zielkriterien ausgeführt werden. Dabei kann eine Pareto-Front ermittelt werden. Für einen jeweiligen ersten Designdatensatz kann dann ein jeweiliger Abstand, z.B. ein euklidischer Abstand zur Pareto-Front ermittelt werden. Damit kann die erste und/oder die zweite Rangfolge der ersten Designdatensätze gemäß ihrem Abstand zur Pareto-Front ermittelt werden. Insbesondere kann einem kleineren Abstand ein höherer Rang in der Rangfolge zugeordnet werden als einem größeren Abstand. Auf diese Weise können mehrere unabhängige Zielgrößen in natürlicher Weise bei der Ermittlung einer Rangfolge von Designdatensätzen berücksichtigt werden. Zudem skaliert die vorstehende Verfahrensweise in vielen Fällen weitgehend problemlos mit der Anzahl der Zielgrößen.

Nach einer weiteren vorteilhaften Ausführungsform der Erfindung kann die Abweichung der jeweiligen zweiten Rangfolge von der ersten Rangfolge mittels einer Kendall-tau-Metrik ermittelt werden.

Vorteilhafterweise kann die Kendall-tau-Metrik hierzu gewichtet werden. Insbesondere kann bei der Anwendung der Kendall-tau-Metrik ein erster Designdatensatz mit geringerem Abstand zur Pareto-Front höher gewichtet werden als ein erster Designdatensatz mit einem größeren Abstand zur Pareto-Front. Auf diese Weise können bessere Designs beim Vergleich der Rangfolgen höher gewichtet werden als schlechtere Designs. Dies ist insofern vorteilhaft, als letztlich die Rangfolge der besten oder nahezu besten Designs für die Auswahl des zielwertoptimierten Designdatensatzes maßgeblich ist.

Ein Ausführungsbeispiel der Erfindung wird nachfolgend anhand der Zeichnung näher erläutert. Dabei veranschaulichen jeweils in schematischer Darstellung:
- Figur 1:: ein Designsystem beim Steuern eines Produktionssystems zur Herstellung eines Produkts,
- Figur 2:: ein erfindungsgemäßes Designsystem in einer Konfigurationsphase,
- Figur 3:: prädizierte Verteilungen von Zielwerten,
- Figur 4:: eine Ermittlung einer Pareto-Front für Designdatensätze, und
- Figur 5:: das erfindungsgemäße Designsystem in einer Anwendungsphase.

In den Figuren bezeichnen gleiche oder korrespondierende Bezugszeichen gleiche oder korrespondierende Entitäten, die wie im Zusammenhang mit der betreffenden Figur beschrieben, implementiert oder realisiert sein können.

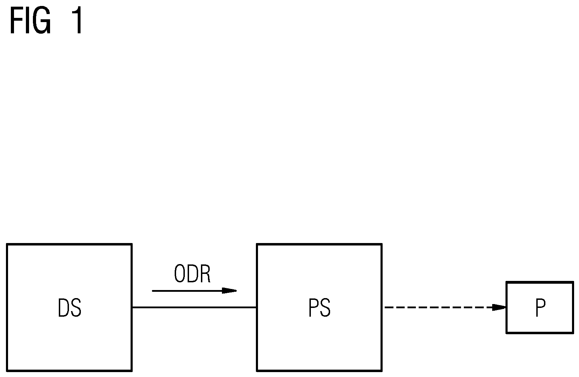

Figur 1 zeigt in schematischer Darstellung ein an ein Produktionssystem PS gekoppeltes Designsystem DS. Das Designsystem DS dient zum rechnergestützten Konstruieren eines hinsichtlich mehrerer Zielgrößen optimierten Produkts P und zum Ansteuern des Produktionssystems PS, um so das Produkt P herzustellen. Das Produktionssystem PS kann hierbei eine Fertigungsanlage, einen Roboter, eine Werkzeugmaschine und/oder andere Geräte zur Herstellung oder Bearbeitung des Produkts P oder einer Komponente davon anhand von Designdaten umfassen. Das hergestellte Produkt P kann ein Motor, ein Roboter, eine Turbinenschaufel, eine Windturbine, eine Gasturbine, ein Kraftfahrzeug oder eine andere technische Struktur oder eine Komponente dieser Produkte sein.

Ein jeweiliges Design oder eine jeweilige Designvariante des herzustellenden Produkts P wird durch Designdaten in Form eines jeweiligen Designdatensatzes spezifiziert. Ein derartiger Designdatensatz kann insbesondere eine Geometrie, eine Struktur, eine Eigenschaft, einen Produktionsschritt, ein Material und/oder eine Komponente des Produkts P spezifizieren.

Erfindungsgemäß soll das Designsystem DS dazu befähigt werden, einen realistischen und hinsichtlich mehrerer vorgegebener Zielgrößen für das Produkt P optimierten Designdatensatz ODR weitgehend automatisch zu erzeugen. Die Zielgrößen können hierbei insbesondere eine Performanz, eine Leistung, einen Ertrag, eine Geschwindigkeit, einen Qualität, ein Gewicht, eine Laufzeit, eine Präzision, eine Fehlerrate, einen Ressourcenverbrauch, einen Wirkungsgrad, eine Effizienz, eine Schwingungsneigung, eine Steifigkeit, eine Wärmeleitung, eine aerodynamische Effizienz, eine Materialermüdung, einen Schadstoffausstoß, eine Stabilität, einen Verschleiß, eine Lebensdauer, eine physikalische Eigenschaft, eine mechanische Eigenschaft, eine chemische Eigenschaft, eine elektrische Eigenschaft, eine magnetische Eigenschaft und/oder andere Konstruktionskriterien oder vom Produkt P einzuhaltende Nebenbedingungen betreffen.

Das Designsystem DS generiert einen derartigen zielwertoptimierten Designdatensatz ODR und übermittelt diesen zum Produktionssystem PS. Anhand des zielwertoptimierten Designdatensatzes ODR wird das Produktionssystem PS dazu veranlasst, ein zielwertoptimiertes Produkt P gemäß dem zielwertoptimierten Designdatensatz ORD herzustellen.

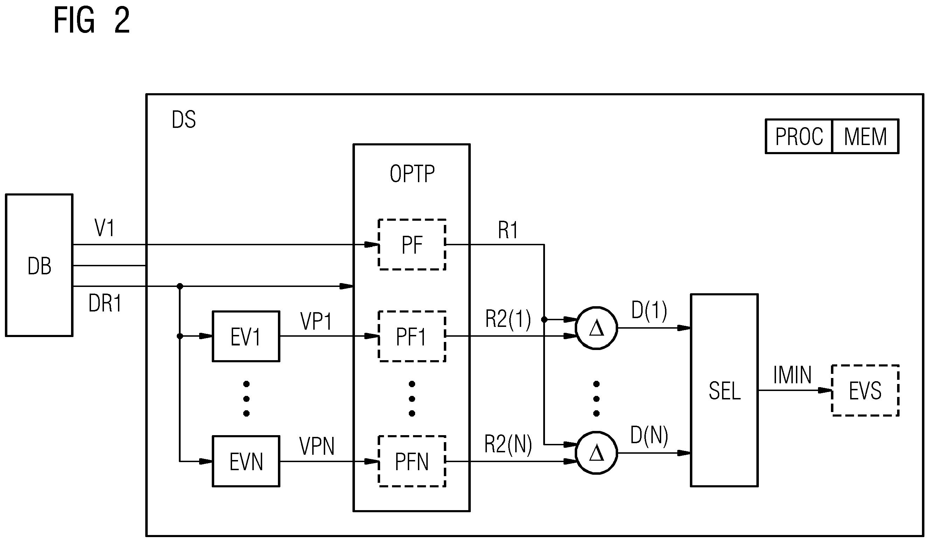

Figur 2 veranschaulicht ein erfindungsgemäßes Designsystem DS in einer Konfigurationsphase. Das Designsystem DS verfügt über einen oder mehrere Prozessoren PROC zur Ausführung des erfindungsgemäßen Verfahrens sowie über einen oder mehrere Speicher MEM zum Speichern von zu verarbeitenden Daten.

Das erfindungsgemäße Designsystem DS soll durch die Konfiguration dazu befähigt werden, Designdatensätze hinsichtlich der für das Produkt P zu optimierenden Zielgrößen möglichst genau zu bewerten. Dabei soll insbesondere eine prädizierte, an den Zielgrößen orientierte Rangfolge der Designdatensätze möglichst genau eine vorgegebene, tatsächliche Rangfolge reproduzieren. Zu diesem Zweck wird durch das Designsystem DS eine Vielzahl von bereitgestellten Designbewertungsmodulen EV1, ..., EVN hinsichtlich ihrer jeweiligen Reproduktionsgenauigkeit dieser Rangfolgen bewertet.

Die Designbewertungsmodule EV1, ..., EVN werden im vorliegenden Ausführungsbeispiel durch Maschinenlernmodule, zum Beispiel künstliche neuronale Netze, implementiert. Die Maschinenlernmodule EV1, ..., EVN werden mittels bekannter und bewerteter Trainingsdatensätze darauf trainiert, anhand eines Trainings-Designdatensatzes zugehörige Trainings-Zielwerte, insbesondere in Form einer statistischen Verteilung von Zielwerten, zu reproduzieren. Zum Training werden einem jeweiligen Maschinenlernmodul EV1, ..., bzw. EVN Trainings-Designdatensätze, zum Beispiel in Form von Vektoren von Designparametern für das Produkt P als Eingabedaten zugeführt. Die daraus resultierenden Ausgabedaten eines jeweiligen Maschinenlernmoduls EV1, ... bzw. EVN werden mit den zugehörigen Trainings-Zielwerten, zum Beispiel einem Vektor von Zielwerten, verglichen und eine Abweichung durch das Training des betreffenden Maschinenlernmoduls minimiert.

Unter einem Training sei hierbei allgemein eine Optimierung einer Abbildung von Eingabedaten auf Ausgabedaten eines Maschinenlernmoduls verstanden. Diese Abbildung wird nach vorgegebenen Kriterien während einer Trainingsphase optimiert. Als Kriterien können z.B. bei Prädiktionsmodellen ein Prädiktionsfehler, bei Klassifikationsmodellen ein Klassifikationsfehler oder bei Steuermodellen ein Erfolg einer Steueraktion herangezogen werden. Durch das Training können insbesondere Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens ist eine Vielzahl von effizienten Optimierungsverfahren verfügbar. Insbesondere können Gradientenabstiegsverfahren, Partikelschwarmoptimierungen und/oder genetische Optimierungsverfahren verwendet werden.

Im vorliegenden Ausführungsbeispiel sind die Designbewertungsmodule EV1, ..., EVN vorzugsweise als sogenannte bayessche neuronale Netze implementiert. Derartige bayessche neuronale Netzwerke können unter anderem als statistische Schätzer aufgefasst werden. Als solcher prädiziert ein bayessches neuronales Netz anstelle einer Punktvorhersage eine statistische Verteilung VPD von Zielwerten. Auf diese Weise erhält man neben einer Schätzung der Zielwerte auch Angaben über deren Unsicherheit. Derartige statistische Verteilungen können insbesondere durch Mittelwerte und Varianzen charakterisiert werden.

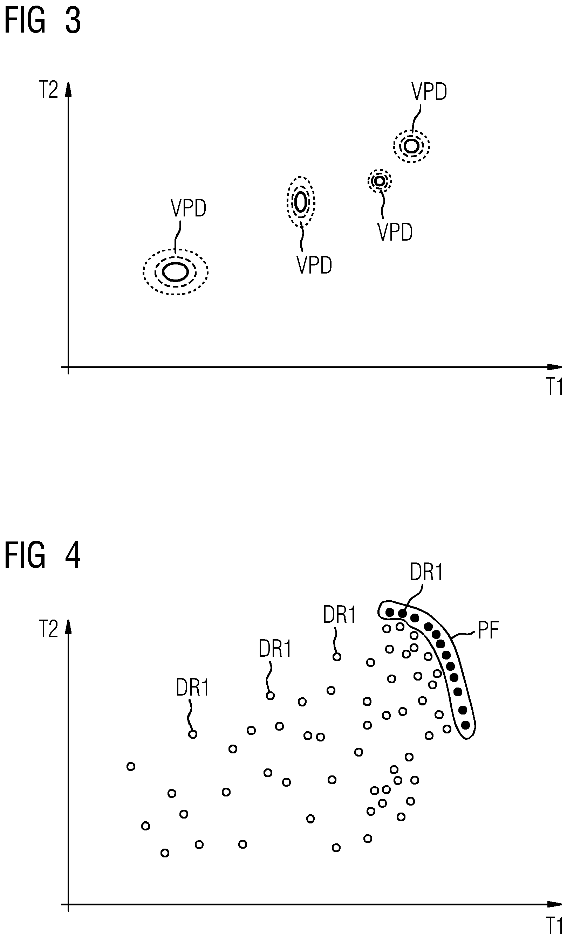

Figur 3 veranschaulicht derartige prädizierte statistische Verteilungen VPD für verschiedene Zielgrößen T1 und T2, hinsichtlich derer das Produkt P optimiert werden soll. Die Zielgrößen T1 und T2 können beispielsweise Gewicht und Schwingungsneigung einer Turbinenschaufel sein. Figur 3 veranschaulicht eine jeweilige prädizierte statistische Verteilung VPD als Höhenliniendiagramm einer Wahrscheinlichkeitsdichte für ein jeweiliges Zielwertepaar.

Effiziente Trainingsverfahren für bayessche neuronale Netze können beispielsweise der Publikation "Pattern recognition and machine learning" von Christoper M. Bishop, Springer 2011, entnommen werden.

Nachdem die Designbewertungsmodule EV1, ..., EVN wie vorstehend beschrieben trainiert wurden, werden - wie Figur 2 weiter veranschaulicht - aus einer mit dem Designsystem DS gekoppelten Datenbank DB bekannte und bewertete Testdatensätze zum Testen der Designbewertungsmodule EV1, ..., EVN eingelesen. Zur Vermeidung von Overfitting-Effekten stammen die Testdatensätze nicht aus der zum Training verwendeten Menge von Trainingsdatensätzen. Analog zu den Trainingsdatensätzen umfassen die Testdatensätze jeweils einen eine Konstruktionsvariante des Produkts P spezifizierenden, ersten Designdatensatz DR1 sowie Zielgrößen dieser Konstruktionsvariante quantifizierende, erste Zielwerte V1.

Die ersten Designdatensätze DR1 werden mit den jeweils zugeordneten ersten Zielwerten V1 in einen Pareto-Optimierer OPTP des Designsystems DS eingespeist. Der Pareto-Optimierer OPTP dient zur Durchführung einer Pareto-Optimierung.

Eine Pareto-Optimierung ist eine multikriterielle Optimierung, bei der mehrere unterschiedliche Zielkriterien, sogenannten Pareto-Zielkriterien, eigenständig berücksichtigt werden. Im vorliegenden Ausführungsbeispiel bilden die zu optimierenden Zielgrößen die Pareto-Zielkriterien. Als Resultat der Pareto-Optimierung wird eine sogenannte Pareto-Front ermittelt.

Figur 4 veranschaulicht eine Ermittlung einer Pareto-Front PF für die ersten Designdatensätze DR1. In Figur 4 sind die ersten Designdatensätze DR1 jeweils gemäß den ihnen zugeordneten Zielwerten als Kreise in ein Koordinatensystem mit den Zielgrößen T1 und T2 als Koordinatenachsen eingetragen. Aus Übersichtlichkeitsgründen sind nur einige wenige der ersten Designdatensätze DR1 beispielhaft durch ein Bezugszeichen gekennzeichnet.

Die Pareto-Front PF wird durch diejenigen Lösungen eines multikriteriellen Optimierungsproblems gebildet, bei denen ein Zielkriterium nicht verbessert werden kann, ohne ein anderes Zielkriterium zu verschlechtern. Eine Pareto-Front bildet also gewissermaßen eine Menge optimaler Kompromisse. Insbesondere lassen sich nicht in der Pareto-Front PF enthaltene Lösungen hinsichtlich mindestens eines Zielkriteriums noch verbessern und können deshalb als suboptimal betrachtet werden.

In Figur 4 werden die ersten Designdatensätze DR1 der Pareto-Front PF durch ausgefüllte Kreise und die nicht der Pareto-Front PF zugehörigen ersten Designdatensätze DR1 durch nicht ausgefüllte Kreise veranschaulicht. Wie aus Figur 4 ersichtlich ist, erfolgt die Pareto-Optimierung in Richtung größerer Zielwerte für die Zielgrößen T1 und T2. Für derartige Pareto-Optimierungen und zur jeweiligen Ermittlung einer Pareto-Front steht eine Vielzahl von effizienten Standardroutinen, insbesondere des maschinellen Lernens, zur Verfügung.

Wie in Figur 2 angedeutet, wird durch den Pareto-Optimierer OPTP eine Pareto-Front PF für die ersten Designdatensätze DR1 hinsichtlich der ersten Zielwerte V1 ermittelt. Anhand der ermittelten Pareto-Front PF wird dann für jeden der ersten Designdatensätze DR1 dessen Abstand zur Pareto-Front PF ermittelt. Als Abstand kann beispielsweise ein euklidischer Abstand ermittelt werden. Die ersten Designdatensätze DR1 werden anschließend gemäß ihrem Abstand zur Pareto-Front PF sortiert. Durch diese Sortierung wird eine erste Rangfolge R1 der ersten Designdatensätze DR1 gebildet. Das heißt, die erste Rangfolge R1 ordnet die ersten Designdatensätze DR1 gemäß ihrem Abstand zur Pareto-Front PF, wobei ein geringerer Abstand einem höheren Rang entspricht als ein größerer Abstand. Die ermittelte erste Rangfolge R1 dient als Vergleichsmaßstab für die nachfolgend ermittelten Rangfolgen.

Erfindungsgemäß wird weiterhin für jedes der Designbewertungsmodule EV1, ..., EVN eine jeweilige zweite Rangfolge R2(1), ... bzw. R2(N) ermittelt. Zu diesem Zweck werden die ersten Designdatensätze DR1 in ein jeweiliges trainiertes Designbewertungsmodul EV1, .... bzw. EVN eingespeist. Das jeweilige Designbewertungsmodul EV1, ... bzw. EVN gibt infolgedessen für jeden ersten Designdatensatz DR1 eine prädizierte statistische Verteilung der Zielwerte aus. Aus jeder ausgegebenen statistischen Verteilung wird dann eine jeweilige Zielwerte-Stichprobe VP1, ... bzw. VPN gemäß dieser jeweiligen statistischen Verteilung gezogen. VP1 bezeichnet hierbei die aus der Ausgabe des Designbewertungsmoduls EV1 gezogene Zielwerte-Stichprobe und entsprechend VPN die aus der Ausgabe des Designbewertungsmoduls EVN gezogene Zielwerte-Stichprobe.

Die Zielwerte-Stichproben VP1, ..., VPN werden in den Pareto-Optimierer OPTP eingespeist. Letzterer ermittelt für jede der Zielwerte-Stichproben VP1, ..., VPN - wie oben beschriebeneine designbewertungsmodulspezifische Pareto-Front PF1, ... bzw. PFN der ersten Designdatensätze DR1. Weiterhin wird für jedes Designbewertungsmodul EV1, ..., EVN und für jeden ersten Designdatensatz DR1 - wie ebenfalls oben beschriebendessen Abstand zur jeweiligen Pareto-Front PF1, ... bzw. PFN ermittelt. Schließlich wird für ein jeweiliges Designbewertungsmodul EV1, ... bzw. EVN gemäß den ermittelten Abständen eine jeweilige zweite Rangfolge R2(1), ... bzw. R2(N) wie oben beschrieben ermittelt.

Die zweiten Rangfolgen R2(1), ..., R2(N) werden daraufhin mit der ersten Rangfolge R1 verglichen. Dabei wird jeweils eine Abweichung D(1), ... bzw. D(N) der jeweiligen zweiten Rangfolge R2(1), ... bzw. R2(N) zur ersten Rangfolge R1 ermittelt. Die jeweilige Abweichung D(i), i = 1, ..., N, wird hierbei vorzugsweise mittels einer modifizierten Kendall-tau-Metrik KT ermittelt, gemäß D(i) = KT(R2(i), R1), i = 1, ..., N. Die Kendall-tau-Metrik KT wird dabei insofern modifiziert, als dass höhere Ränge der jeweils verglichenen Rangfolgen höher gewichtet werden, beispielsweise mit einem Faktor 1/(R+1), wenn R einen jeweiligen Rang bezeichnet. Ein kleinerer Wert des Rangs R entspricht hierbei einem höheren Rang in der jeweiligen Rangfolge.

Die Abweichungen D(1), ..., D(N) werden in ein Selektionsmodul SEL des Designsystems DS eingespeist. Das Selektionsmodul SEL dient zum Selektieren desjenigen oder derjenigen der Designbewertungsmodule EV1, ..., EVN, das oder die eine Rangfolge der ersten Designdatensätze DR1 am besten oder möglichst gut reproduzieren. Zu diesem Zweck werden die Abweichungen D(1), ..., D(N) durch das Selektionsmodul SEL bewertet. Dabei werden zur Berücksichtigung der stochastischen Zielwerte-Eigenschaften die obige Ziehung der Zielwerte-Stichproben VP1, ..., VPN sowie deren weitere Verarbeitung mehrmals oder oftmals wiederholt. Die resultierenden Abweichungen D(1), ..., D(N) werden dann über diese Wiederholungen gemittelt. Neben einem Mittelwert oder einem Median wird vorzugsweise auch eine Varianz oder ein Konfidenzintervall der Abweichungen D(1), ..., D(N) berechnet.

Abhängig von den eingespeisten Abweichungen D(1), ..., D(N) ermittelt das Selektionsmodul SEL einen Index IMIN desjenigen der Designbewertungsmodule EV1, ..., EVN, das im Mittel eine geringste oder zumindest eine geringere Abweichung D(IMIN) als andere der Designbewertungsmodule EV1, ..., EVN aufweist. Das durch den Index IMIN aus den Designbewertungsmodulen EV1, ..., EVN selektierte Designbewertungsmodul wird im Folgenden als EVS bezeichnet.

Offenbar kann das selektierte Designbewertungsmodul EVS eine zielwertorientierte Rangfolge von Designdatensätzen besser reproduzieren als andere der Designbewertungsmodule EV1, ..., EVN. In der Praxis erweist sich, dass ein auf diese Weise selektiertes Designbewertungsmodul in der Regel sehr robuste Bewertungen von Designdatensätzen vornehmen kann.

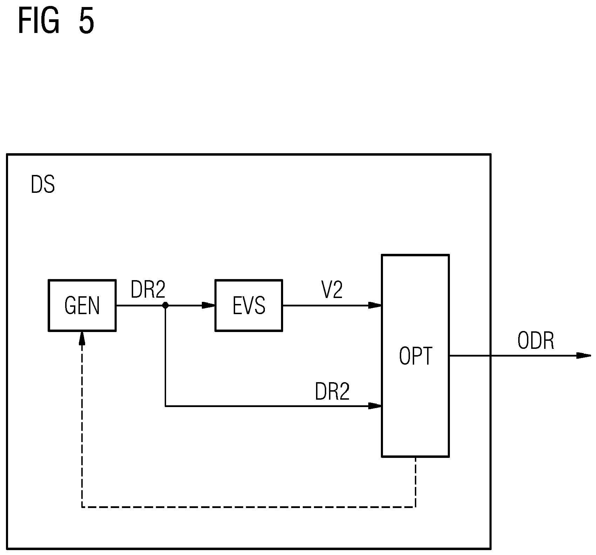

Eine entsprechende Anwendung des Designsystems DS mit dem selektierten Designbewertungsmodul EVS wird durch Figur 5 veranschaulicht. Das Designsystem DS verfügt hierzu über einen Generator GEN zum Generieren von synthetischen, zweiten Designdatensätzen DR2, die jeweils eine Konstruktionsvariante des zu optimierenden Produkts P spezifizieren. Die Erzeugung der zweiten Designdatensätze DR2 kann insbesondere auch zufallsinduziert erfolgen, um so auch bislang unbekannte Bereiche möglicher Konstruktionsvarianten zu erschließen. Die zweiten Designdatensätze DR2 werden vom Generator GEN in das selektierte Designbewertungsmodul EVS sowie in ein Optimierungsmodul OPT des Designsystems DS eingespeist.

Das selektierte Designbewertungsmodul EVS prädiziert, wie oben bereits beschrieben, für einen jeweiligen zweiten Designdatensatz DR2 zweite Zielwerte V2, jeweils in Form einer statistischen Verteilung. Eine jeweilige statistische Verteilung kann hierbei insbesondere durch einen Mittelwert und dessen Unsicherheit gegeben sei. Die zweiten Zielwerte V2 werden vom selektierten Designbewertungsmodul EVs in das Optimierungsmodul OPT eingespeist. Anhand der Eingabedaten DR2 und V2 selektiert das Optimierungsmodul OPT einen oder mehrere der zweiten Designdatensätze DR2 mit den höchsten oder zumindest mit höheren zweiten Zielwerten V2 und/oder mit einer geringeren Unsicherheit als andere der zweiten Designdatensätze DR2.

Insbesondere kann derjenige der zweiten Designdatensätze DR2 als zielwertoptimierter Designdatensatz ODR ausgegeben werden, der eine maximale gewichtete Kombination der Zielwerte V2 und deren Unsicherheiten aufweist. Alternativ oder zusätzlich kann ein zielwertoptimierter Designdatensatz ODR aus mehreren nach den obigen Kriterien ausgewählten zweiten Designdatensätzen DR2 interpoliert werden.

Der zielwertoptimierte Designdatensatz ODR wird schließlich vom Optimierungsmodul OPT ausgegeben und kann, wie im Zusammenhang mit Figur 1 beschrieben, zur Ansteuerung des Produktionssystems PS verwendet werden, um so das designoptimierte Produkt P herzustellen.

## Patentansprüche

1. Computerimplementiertes Verfahren zum Steuern eines Produktionssystems (PS) zur Herstellung eines hinsichtlich mehrerer Zielgrößen (T1, T2) optimierten Produkts (P), wobei
a) eine Vielzahl von Testdatensätzen eingelesen werden, die jeweils einen eine Konstruktionsvariante des Produkts (P) spezifizierenden, ersten Designdatensatz (DR1) sowie die Zielgrößen dieser Konstruktionsvariante quantifizierende, erste Zielwerte (V1) umfassen,
b) eine erste Rangfolge (R1) der ersten Designdatensätze (DR1) hinsichtlich der ersten Zielwerte (V1) ermittelt wird,
c) mehrere Designbewertungsmodule (EV1,...,EVN) jeweils zur Prädiktion von Zielwerten anhand von Designdatensätzen bereitgestellt werden,
d) durch die Designbewertungsmodule (EV1,...,EVN) jeweils Zielwerte (VP1,...,VPN) für die ersten Designdatensätze (DR1) prädiziert werden,
e) für ein jeweiliges Designbewertungsmodul (EV1,...,EVN)
- eine jeweilige zweite Rangfolge (R2) der ersten Designdatensätze (DR1) hinsichtlich der prädizierten Zielwerte (VP1,...,VPN) ermittelt wird, und
- eine jeweilige Abweichung (D) der jeweiligen zweiten Rangfolge (R2) von der ersten Rangfolge (R1) ermittelt wird,
f) abhängig von den ermittelten Abweichungen (D) ein Designbewertungsmodul (EVS) selektiert wird,
g) eine Vielzahl von zweiten Designdatensätzen (DR2) generiert wird, für die jeweils durch das selektierte Designbewertungsmodul (EVS) zweite Zielwerte (V2) prädiziert werden, und
h) abhängig von den zweiten Zielwerten (V2) ein zielwertoptimierter Designdatensatz (ODR) aus den zweiten Designdatensätzen (DR2) abgeleitet und zur Herstellung des Produkts (P) ausgegeben wird.

2. Verfahren nach Anspruch 1, **dadurch gekennzeichnet,**
**dass** als Designbewertungsmodule (EV1,...,EVN) Maschinenlernmodule bereitgestellt werden, die mittels Trainingsdatensätzen darauf trainiert wurden, anhand eines Trainings-Designdatensatzes zugehörige Trainings-Zielwerte zu reproduzieren, und
**dass** die Testdatensätze nicht mit den Trainingsdatensätzen übereinstimmen.

3. Verfahren nach einem der vorhergehenden Ansprüche, **dadurch gekennzeichnet,**
**dass** als Designbewertungsmodule (EV1,...,EVN) Simulationsmodule bereitgestellt werden, die jeweils anhand eines eine Konstruktionsvariante spezifizierenden Designdatensatzes die Zielwerte dieser Konstruktionsvariante simulativ prädizieren.

4. Verfahren nach einem der vorhergehenden Ansprüche, **dadurch gekennzeichnet,**
**dass** ein jeweiliges Designbewertungsmodul (EV1,...,EVN) zur Prädiktion von Zielwerten für einen jeweiligen ersten Designdatensatz (DR1) jeweils eine statistische Verteilung (VPD) dieser Zielwerte ausgibt,
**dass** anhand der jeweiligen statistischen Verteilung (VPD) eine jeweilige Zielwerte-Stichprobe (VP1,...,VPN) ausgewählt wird,
**dass** die jeweilige zweite Rangfolge (R2) hinsichtlich der ausgewählten Zielwerte-Stichproben (VP1,...,VPN) ermittelt wird, und
**dass** die ausgewählten Zielwerte-Stichproben (VP1,...,VPN), die ermittelten zweiten Rangfolgen (R2) und/oder die ermittelten Abweichungen (D) zur Selektion eines Designbewertungsmoduls über mehrere Durchläufe des Verfahrensschritts e) aggregiert werden.

5. Verfahren nach einem Anspruch 4, **dadurch gekennzeichnet,**
**dass** eine jeweilige statistische Verteilung (VPD) durch einen Mittelwert, einen Median, eine Varianz, eine Standardabweichung, eine Unsicherheitsangabe, eine Zuverlässigkeitsangabe, eine Wahrscheinlichkeitsverteilung, einen Verteilungstyp und/oder eine Verlaufsangabe spezifiziert wird.

6. Verfahren nach einem der vorhergehenden Ansprüche, **dadurch gekennzeichnet,**
**dass** zum Ermitteln der ersten und/oder der jeweiligen zweiten Rangfolge (R1, R2)
- für die ersten Designdatensätze (DR1) eine Pareto-Optimierung mit den Zielgrößen (T1, T2) als Pareto-Zielkriterien ausgeführt wird, wobei eine Pareto-Front (PF) ermittelt wird,
- für einen jeweiligen ersten Designdatensatz (DR1) ein jeweiliger Abstand zur Pareto-Front (PF) ermittelt wird, und
- die erste und/oder zweite Rangfolge (R1, R2) der ersten Designdatensätze (DR1) gemäß ihrem Abstand zur Pareto-Front (PF) ermittelt wird.

7. Verfahren nach einem der vorhergehenden Ansprüche, **dadurch gekennzeichnet, dass**
die Abweichung der jeweiligen zweiten Rangfolge (R2) von der ersten Rangfolge (R1) mittels einer Kendall-tau-Metrik ermittelt wird.

8. Verfahren nach Anspruch 7, **dadurch gekennzeichnet, dass** bei der Anwendung der Kendall-tau-Metrik ein erster Designdatensatz (DR1) mit geringerem Abstand zur Pareto-Front (PF) höher gewichtet wird als ein erster Designdatensatz (DR1) mit einem größeren Abstand zur Pareto-Front (PF).

9. Verfahren nach einem der vorhergehenden Ansprüche, **dadurch gekennzeichnet, dass**
ein jeweiliges Designbewertungsmodul (EV1,...,EVN) ein künstliches neuronales Netz, ein bayessches neuronales Netz, ein rekurrentes neuronales Netz, ein faltendes neuronales Netz, ein mehrlagiges Perzeptron, einen Autoencoder, eine Deep-Learning-Architektur, eine Support-Vektor-Maschine, ein datengetriebenes trainierbares Regressionsmodell, einen k-nächste-Nachbarn-Klassifikator, ein physikalisches Modell und/oder einen Entscheidungsbaum umfasst.

10. System (DS) zum Steuern eines Produktionssystems (PS) zur Herstellung eines hinsichtlich mehrerer Zielgrößen (T1, T2) optimierten Produkts (P), eingerichtet zum Ausführen eines Verfahrens nach einem der vorhergehenden Ansprüche.

11. Computerprogrammprodukt eingerichtet zum Ausführen eines Verfahrens nach einem der Ansprüche 1 bis 9.

12. Computerlesbares Speichermedium mit einem Computerprogrammprodukt nach Anspruch 11.
